Europäisches Patentamt

(19) European Patent Office

Office européen des brevets

(11) Publication number: **0 011 652**
**B1**

(12) **EUROPEAN PATENT SPECIFICATION**

(45) Date of publication of patent specification: **19.10.83**

(51) Int. Cl.³: **B 23 Q 35/24**

(21) Application number: **79900345.4**

(22) Date of filing: **23.03.79**

(86) International application number:
**PCT/JP79/00071**

(87) International publication number:
**WO 79/00831 18.10.79 Gazette 79/21**

(54) **A TRACER FOR CONTOUR OR SURFACE PROFILING.**

(30) Priority: **24.03.78 JP 34703/78**

(43) Date of publication of application:
**11.06.80 Bulletin 80/12**

(45) Publication of the grant of the patent:
**19.10.83 Bulletin 83/42**

(84) Designated Contracting States:
**CH DE FR GB SE**

(56) References cited:
**DE - A - 1 502 067**
**DE - A - 1 802 304**
**GB - A - 1 002 990**
**JP - A - 49 125 983**
**JP - A - 49 125 984**
**US - A - 2 682 202**
**US - A - 2 741 952**
**US - A - 2 909 357**
**US - A - 3 270 619**
**US - A - 3 273 462**
**US - A - 3 459 402**
**US - A - 3 481 577**
**US - A - 3 520 063**
**US - A - 3 529 801**

(73) Proprietor: **HOSOI, Toshiaki**
**9-10, Kamiminami 5-chome Hirano-ku**
**Osaka-shi Osaka 546 (JP)**

(72) Inventor: **HOSOI, Toshiaki**
**9-10, Kamiminami 5-chome Hirano-ku**
**Osaka-shi Osaka 546 (JP)**

(74) Representative: **Smith, Martin Stanley et al,**
**Stevens, Hewlett & Perkins 5, Quality Court**
**Chancery Lane**
**London WC2A 1HZ (GB)**

Courier Press, Leamington Spa, England.

## Tracer for contour or surface profiling

This invention relates to a tracer for contour or surface profiling for use in a machine tool etc.

In a known profiling device for contour profiling (X—Y axis profiling) milling machine, for example, in the Japanese Patent Kokai No. 49-125983 by this inventor, the device has vertical spindle which fits a stylus eccentrically and the spindle is designed to rotate in a clockwise or counter-clockwise direction when the rotating stylus contacts or parts from the model by virtue of on-off switch operation. Therefore, the electric motor for the spindle always rotates in a clockwise or counter-clockwise direction, there is created a very large change of the rotational speed, i.e., clockwise — zero — counter-clockwise — zero — clockwise process is repeated. On the other hand, heavy rotating parts such as the rotor of the motor, the reduction, gear, the spindle, the stylus are subjected to the above large change of rotational speed, then the rotational inertia for these parts becomes very large. Therefore, the change of rotational speed for the spindle cannot immediately respond to its contact with the model, consequently profiling accuracy is not satisfactory.

And also, in a conventional surface profiling device (Z axis profiling) such as U.S. Patent No. 3520063 where the inclination (rise and fall) of the vertical spindle is detected by the differential transformer, as the cutter does not incline, it comes to go ahead of the stylus and to give the work an excess deep cutting or to require larger stylus compensating the inclination. Furthermore, when the stylus profiles a horizontal plane connecting to the upper end of the above steep slope, the core of the differential transformer comes to have a large displacement from the plus position to the minus position. Then the cutting accuracy of the above work corner comes to be seriously injured.

Furthermore, since the stylus in a conventional surface profiling device such as Japanese Patent No. 125984 and German Patent No. 1802304 has been permitted to somewhat oscillate with respect to the tracer body, for instance, when profiling in vertical axis direction (Z axis), the stylus is kept in contact with the horizontal plane of table on which a model and a work are fixed and the table is fed to the right until the stylus hits against the right side ascent slope of the model, where the stylus slightly inclines toward the right so that the cutter goes ahead the stylus, thereby making it impossible to process in the same dimensions as the model, which, therefore, has been compensated by designing the stylus somewhat thicker than the cutter. However, when the stylus reaches the descent slope, the said inclination of the stylus is nearly cancelled to be concentric with the cutter, and the cutter advances by a portion of its thickness from the contact point of stylus and model, so that the work cannot be cut. When the stylus leaves the model, going far to a certain distance, the table is fed to the left until the stylus touches the left side ascent slope of the model, then, similarly, the left side ascent slope is cut but the right side descent slope is left uncut. Accordingly, the roughness on the work is twice as bad as in the case of pick feed, thereby requiring enormous effort in finishing.

It is an object of the present invention to provide a tracer which has a capacity of a high accuracy for contour (X—Y axis) profiling.

Another object of the invention is to provide a tracer which has a capacity of high speed heavy cutting for surface (Z axis) profiling.

A further object of the invention is to provide a tracer which enables a good roughness of cutting work surface for surface (Z axis) profiling.

These objects are attained in the present invention as follows.

According to the invention there is provided a tracer for contour or surface profiling comprising a stylus eccentrically fixed at a lower end of a tracer spindle, the spindle being supported in a tracer case roughly vertically in a way to permit slight inclination and free rotation, a spindle inclination detecting unit provided so as to detect spindle inclination with respect to contact of the stylus with a model in an analogue fashion and a work table shift command plate supported to permit rotation at the same speed as the spindle characterised in that the outer periphery of the command plate is of smooth curvature such that the distance from centre of rotation to the outer periphery symmetrically increases gradually according to the curvature of $H(1-\cos B)$ (where, H: maximum increment of distance from centre of rotation $O_2$ of command plate 50 to the outer periphery, B: an angle of radius vector with respect to symmetrical line n of command plate $50_a$) from a near point at zero degrees up to positive and negative 90°, and being constant elsewhere, and in that there are provided the work table shift detecting means including a disc fixed in the tracer case, four photoelectric transducer elements mounted radially on the disc at equal intervals on the periphery of a circle concentric with shaft centre $O_2$ of the spindle, pairs of said photo-electric transducer elements confronting each other with respect to the centre of the tracer spindle and being positioned on the longitudinal and lateral line of direction of the work table motion respectively, there being light sources confronting photo-electric element, and in that the spindle inclination detecting unit comprises a differential transformer which gives analogue signals in accordance with the extent of inclination.

## Brief description of the drawing

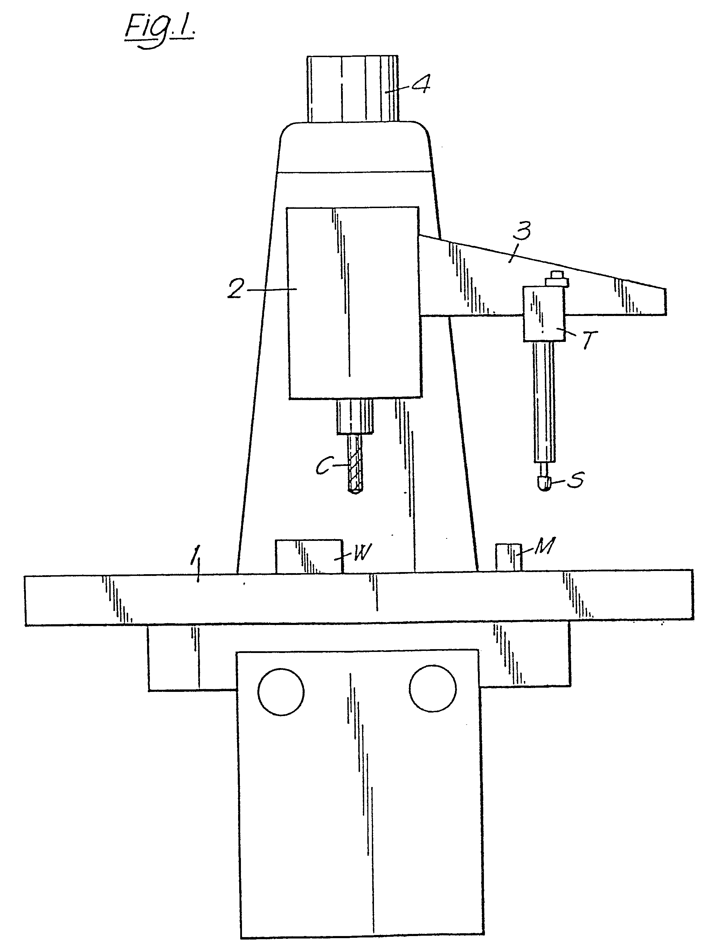

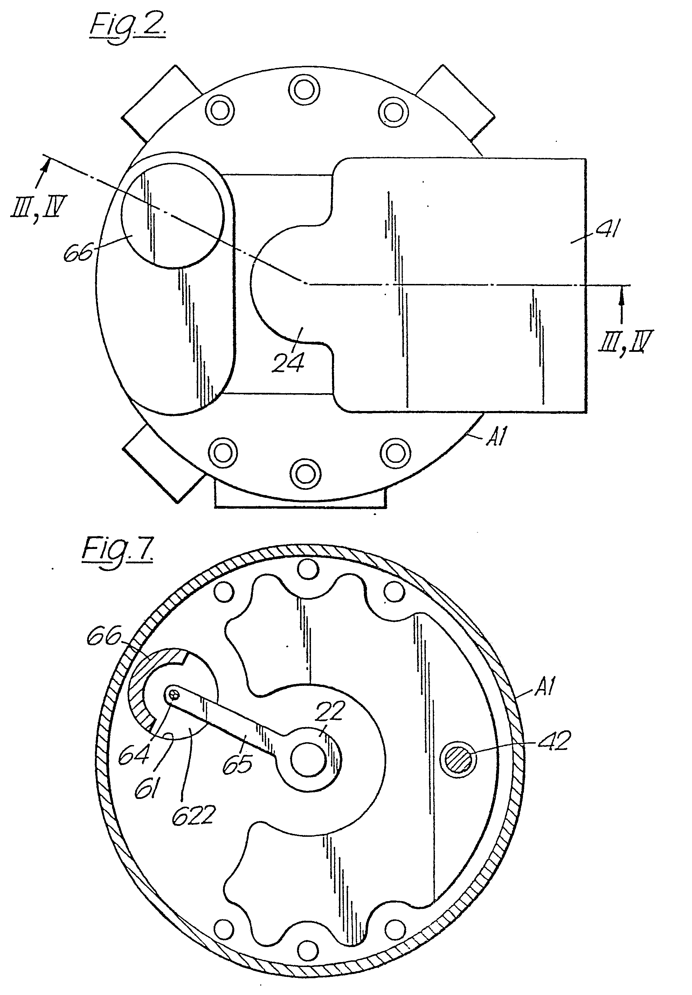

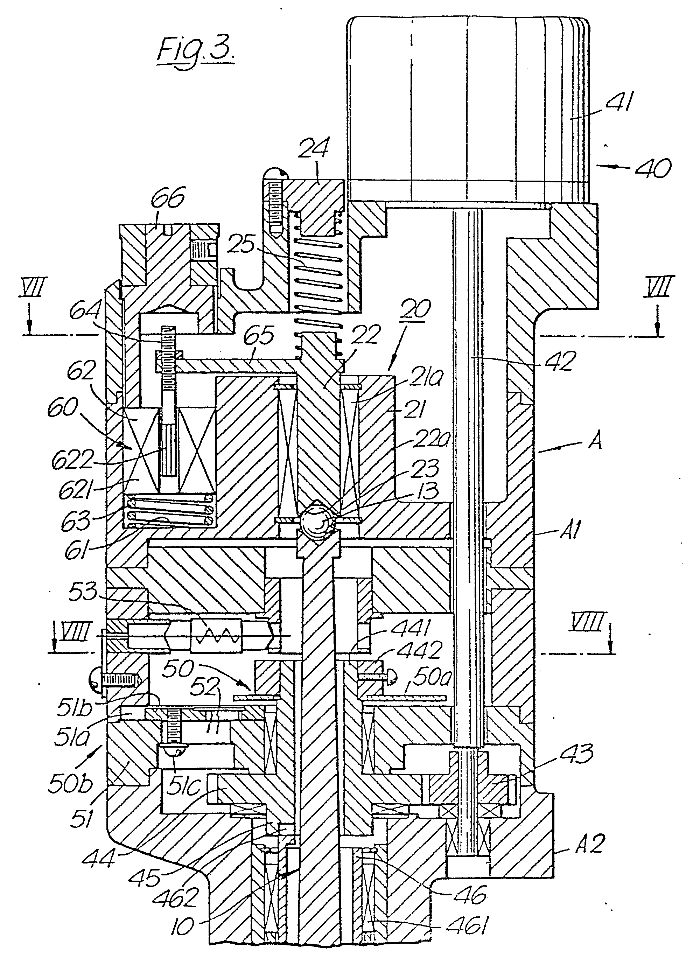

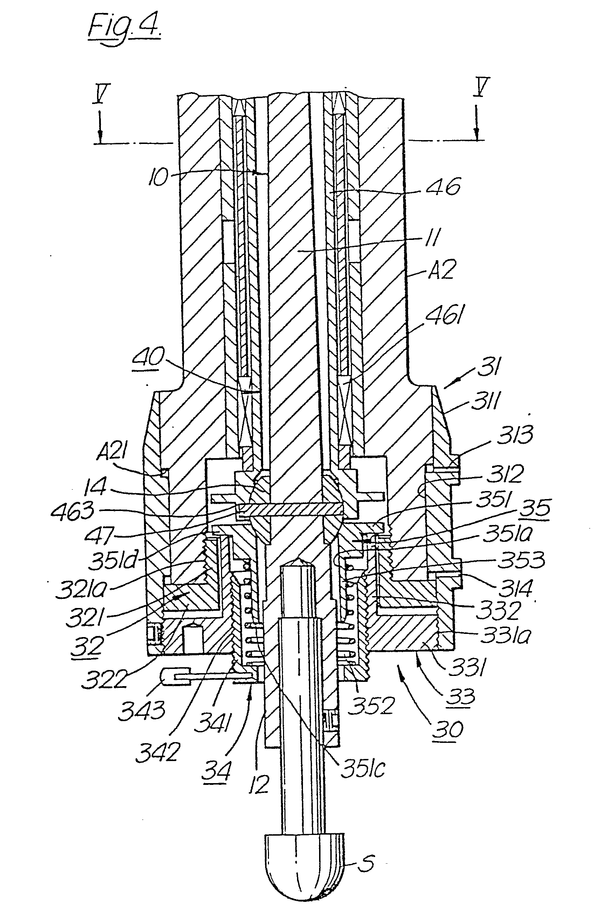

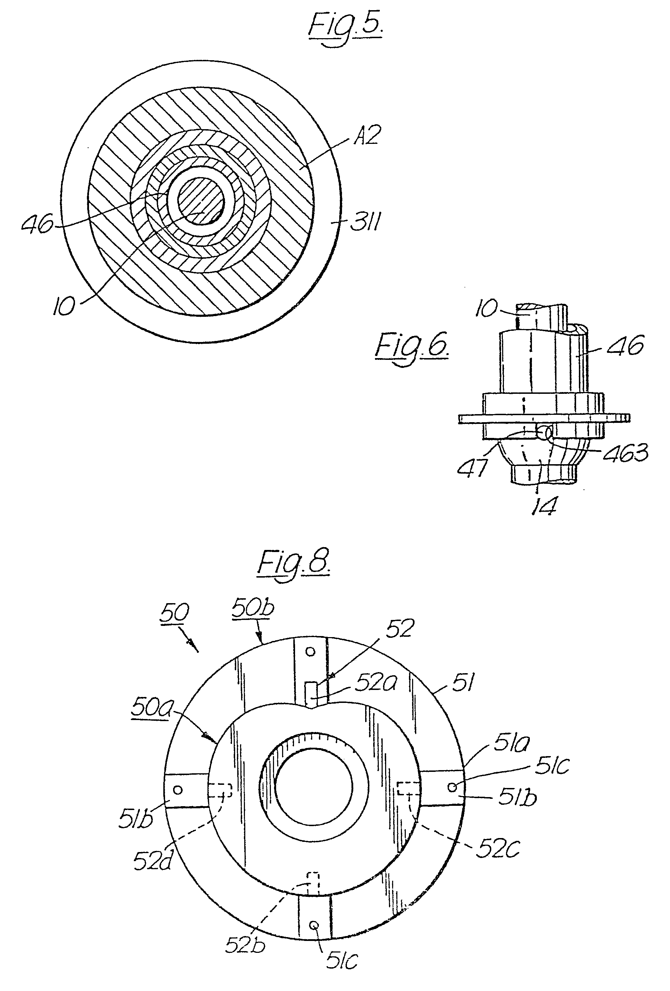

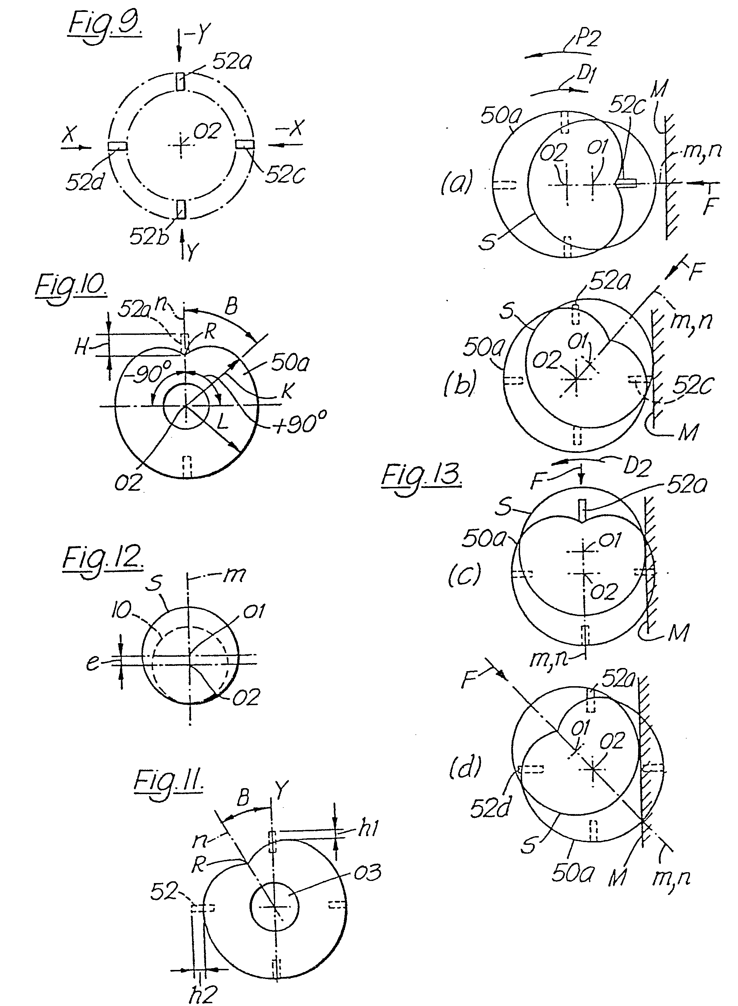

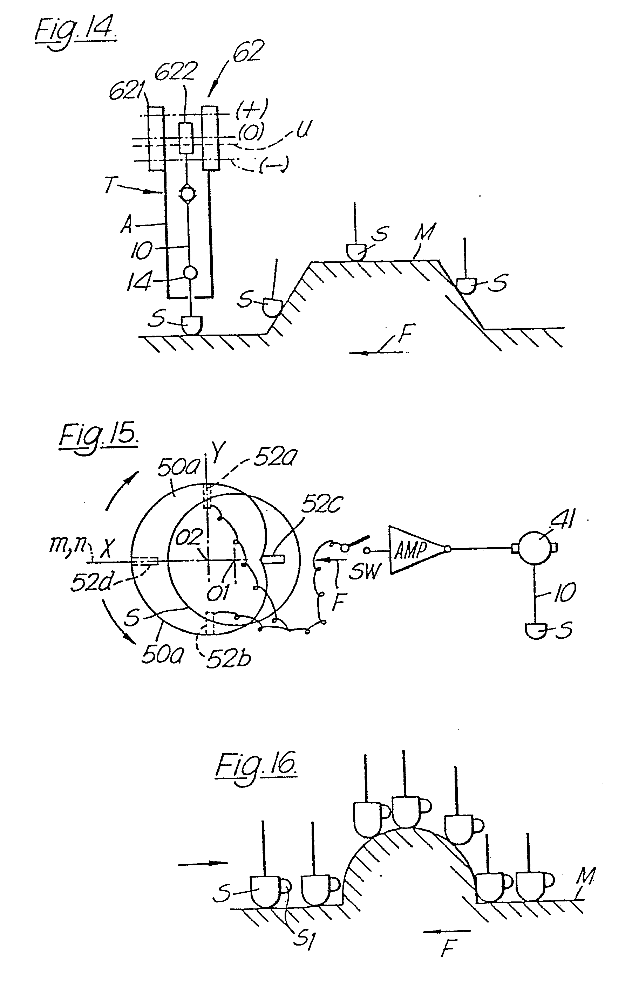

Figure 1 is a schematic elevation of the tracer according to this invention; Figure 2 is a top view of the tracer showing a preferred embodiment of the invention; Figure 3 is a cross-sectional view of the upper part taken along the line III—III of Figure 2; Figure 4 is a cross-sectional view of the lower part taken along the line IV—IV of Figure 2; Figure 5 is a cross-sectional view taken along the line V—V of Figure 4; Figure 6 is a partially cutaway side view of the spherical support; Figure 7 is a cross-sectional view taken along the line VII—VII of Figure 3; Figure 8 is a cross-sectional view taken along the line VIII—VIII of Figure 3; Figure 9 is a plan view of photoelectric element arrangement; Figure 10 and 11 are plan views of the table shift command plate respectively; Figure 12 is a descriptive view of the stylus; Figure 13 is a descriptive view of the contour profiling operation; Figure 14 is a descriptive view of the surface profiling operation; Figure 15 is a wiring diagram showing an embodiment of the directivity holding means and the spindle inverting means; and Figure 16 is an operation view of other embodiment of the stylus.

## Best mode for carrying out the invention

Hereunder is explained one practical example of the invention in reference to the drawings attached hereto. Figure 1, showing an entire view of a tracer which consists of table 1, spindle head 2, tracer arm 3, Z-axis motor 4, tracer S, and cutter C. Figures 2 through 4, in which tracer spindle 10 is accommodated between upper box $A_1$ and lower box $A_2$ of tracer case A. The tracer spindle 10 consisting of main body 11, stylus mounting part 12, upper support dent 13 to detect inclination of spindle 10 having main body upper end designed in reversed conical form and lower support spherical fulcrum 14 to permit slight inclination of spindle 10.

Stylus S has a column on the top of its hemispherical part and is added with a correction allowance for spindle inclination to be thicker than cutter C. And, as shown in Figure 12, it is fitted to spindle 10, having center $O_1$ which is offset by e against the center of rotation $O_2$ of spindle.

At spindle upper support 20, displacement bar 22 is provided, being held by way of bearing 21a, which penetrates vertically through the central part of support block 21, in a manner to permit rotation and free vertical movement. At the lower end of displacement bar 22 is composed support dent 22a in reversed conical form. And, spherical midway displacement member 23 is held between the said support dent 22a and upper support dent 13. Also, spring retainer 24 is fitted to upper box $A_1$ in a detachable manner (which may be designed screw-adjustable), and press-down spring 25 is inserted between displacement bar and it.

Spindle lower support 30 retains tracer spindle 10 almost vertically in a manner to permit rotation and slight inclination and slight vertical movement. Support tube 31 is provided roughly in concentricity with spindle 10 on the outer periphery of case $A_2$ in a manner to permit slight vertical oscillation. This support tube 31 consists of cylindrical body 311 and peripheral bank 312 which is provided on the tube interior by way of step in the midway in the axial direction. At the upper side and lower side from the top and bottom face of this bank 312 are furnished pressure oil inlets 313 and 314 for lowering and raising spindles, respectively. At the lower periphery of case $A_2$, step $A21$ is formed on the top of peripheral bank 312, which serves as an upper stopper to restrict the upper limit of support tube 31.

Meanwhile, in order to restrict the lower limit of support tube 31, support tube lower stopper 32 roughly in concentricity with spindle 10 is fixed in the lower interior of lower cylindrical part $A_2$ by way of outer screw 321a of mounting cylinder 321. Furthermore, outer circular flange 322 provided at the lower end of mounting cylinder 321 closely contacts with the lower end of lower cylindrical part $A_2$, and its circumferential edge serves as a stopper for the said peripheral bank 312.

At the lower end of support tube 31 is fitted lift-up member 33 in rough concentricity with spindle so as to lift spindle 10 temporarily and slightly. This member 33 consists of mounting flange 331 fitted in the inside of support tube 31 by way of outer screw 331a, and cylindrical body 332 which is composed integral at its center and designed to lift spindle 10 at the upper end.

Moreover, in order to support the spindle 10 by means of contact pressure adjusting spring 352 which is explained later, the spring shoe 34 is provided in rough concentricity with spring 10. This spring shoe 34 consists of cylindrical spring shoe body 341 having hole and bottom which is fitted to the inside of the said cylindrical body 332 by way of outer screw 342, and contact pressure adjusting handle 343 provided at its lower end.

In order to hold the spherical part 14 of spindle 10, there is spindle guide 35 provided in rough concentricity thereof. This spindle guide 35 includes spindle receiver 351, spring 352 to adjust contact pressure of stylus S with respect to model M, and spring guide tube 353.

Spindle drive unit 40 to rotate tracer spindle 10 is as illustrated in Figure 3. Namely, this drive unit 40 contains motor 41, first drive shaft 42, pinion 43, and gear 44; and toothed drive piece 45 is provided at the bottom of gear 44. Second drive shaft 46 which composes a hollow shaft is loosely fitted to the outer periphery of tracer spindle body 11, being supported by bearing 461 at the side and by spindle spherical part 14 at the lower end, in rough concentricity with spindle 10 and in a manner to permit rotation and slight vertical oscillation. At the upper end of shaft 46 is provided driven piece 462 in mesh with the said drive piece 45. Besides, engagement notch 463 is provided at the lower end of shaft 46, and rotation arm 47 to transmit rotation of shaft 46 to spindle is provided on spindle 10 in mesh with the said notch 463.

Table shift command part 50 is housed in case $A_1$, and, as shown in Figures 3, 8 and 9, consists of table shift command photo mask plate 50a and table shift speed ratio detector 50b which includes insulation disk 51, photoelectric element 52 and light source 53. That is, insulation disk 51 for mounting photoelectric element which is concentrically and loosely fitted to boss 441 of gear 44 and fixed in case $A_1$ has four equally spaced radial grooves 51a provided on its peripheral surface, and in these grooves are fitted mounting pieces 51b by means of clamps 51c in a manner to permit free movement in the radial direction of the disk. Photoelectric transducer element 52, as shown in Figures 8 and 9, consists of four rectangular plates 52a, 52b, 52c and 52d which are fixed to mounting pieces 51b at equal intervals on the periphery of a circle concentric with shaft center $O_2$ of spindle 11, of which plates 52a and 52b are opposed to the longitudinal moving direction of the table (Y-axis) while 52c and 52d are made to confront to the lateral moving direction of the table (X-axis). The voltage created by these four elements is amplified to rotate d.c. motors (not shown) for driving X-axis and Y-axis of the operation unit, or to reach a servo-valve to drive hydraulic motor or hydraulic cylinder, being designed to move the work tables in two directions intersecting with each other at right angles both longitudinally and laterally. Light source 53 confronts photoelectric element 52.

Table shift command photo mask plate 50a is installed between photoelectric element 52 and light source 53 being concentric with spindle by means of gear boss 441 and collar 442. As illustrated in Figure 10, distance L from center of rotation $O_2$ of the said plate 50a to the outer periphery is so determined that it be symmetrical to straight line n which runs through near point R and center of rotation $O_2$, from near point R at zero degree up to positive and negative 90 degrees, and that it gradually increases according to the curvature of H (1—cosB) (where, H: maximum increment of distance from center of rotation $O_2$ of command plate 50a to the outer periphery, B: an angle of radius vector K with respect to symmetrical line n of command plate 50a), and that it be constant at other angle range than mentioned above, namely, making the periphery an arc, moreover that when the near point R comes to correspond to either one of the photoelectric elements 52, for instance 52c along with rotation of command plate 50c, the photo receiving area of 52c be maximum, and when it corresponds to the angle range of constant distance, the photo receiving area be zero. Furthermore, the said straight line n is made to coincide with a straight line m which connects stylus center $O_1$ and spindle center $O_2$, and near point R is positioned at $O_1$ side rather than $O_2$ side (Figure 13).

Spindle inclination detecting unit 60 issues a signal to change the rotational speed of motor 41 in proportion to an extent of inclination to vertical of spindle 10 when stylus S contacts the model as shown in Figure 3. At the said detection unit 60, differential transformer 62 consisting of coil 621 and core 622 of which moving direction is made parallel to that of displacement bar by means of support spring 63 is housed in cylindrical cavity 61 in block 12. Core holding bar 64 directs toward the vertical direction and is mounted in a manner to permit free height adjustment by means of outer screw and arm 65. This core holding arm 65 is projected out in the perpendicular and horizontal direction of displacement bar 22 from its upper part. At the upper end of tracer case upper box $A_1$ which is found right above the differential transformer, height adjusting member 66 for coil 621 is fitted by screwing in a detachable manner.

Here, the signal from differential transformer 62 is specified as follows: That is, while stylus S is not in contact with model M on the table, stylus S is at the lowest position with respect to case A by virtue of its own weight, hence differential transformer creates a negative voltage. When stylus S contacts model M, the voltage becomes zero depending upon its extent of inclination and further advances to a positive voltage.

Next, operation modes are explained below. In the case of contour profiling (X—Y axis profiling), spindle 10 remains at the lowest position with respect to case A, then the spindle is lifted by the lift-up means 33 and core 622 of differential transformer is lower than the zero volt position, that is, at the position where the voltage of differential transformer indicates a slight negative value. Thereby, motor 41 rotates at a low speed and the rotation is transmitted to tracer spindle 10 and stylus S via reducing gears 43, 44 and second drive shaft 46.

As shown in Figure 13a, when model M and stylus S are apart from each other, spindle 10 is given rotation in the direction of arrow $D_1$ by motor 41, according to minus voltage from differential transformer. When model M is brought into contact with stylus S by manually moving the table, the offset of stylus S and rotation of motor 41 cause stylus S to be pressed against model M. In reverse proportion to the rise of ball 23 caused by inclination of spindle, the motor 41 decreases its speed and stops to be in the state of Figure 13b. Thereby generating a table signal in the direction of arrow F through elements 52a and 52c. When model M further approaches to increase the spindle inclination, the voltage of transformer 62 becomes plus and motor 41 rotates in $D_2$ direction and stops when the spindle inclination returned to preset value. When model M makes another advancement, the voltage of transformer becomes positive again to cause the motor 41 to rotates in the $D_2$ direction to be in the state of Figure 13d. And model M is fed in the direction of arrow F to go apart, finally returning to the state of Figure 13c. Consequently, as shown in Figure 13c, lines m and n are parallel to the tangential direction at the contact point of model M.

In other words, photoelectric transducer element 52 sends signal to the table servo mechanism to move lines m and n in a specified direction along model M, being remote by the distance of radius of stylus S minus displacement and at right angle to the normal line of model M.

Here, attention must be drawn to the fact, that the profiling speed is constant. Suppose, in Figure 11, that the rotation angle of line n of plate 50a with respect to the diameter on photoelectric elements 52a, 52b is B and that the photo receiving lengths of photoelectric elements 52a and 52d are $h_1$ and $h_2$ respectively. Since the maximum photo receiving height of photoelectric element is equal to H, it follows that:

$$h_1=H-H \cdot (1-cosB)=H \cdot cosB$$
$$h_2=H-H \cdot \{1-cos(90-B)\}=H \cdot sinB$$

Since the profiling speeds in each axial direction are respectively proportional to $h_1$ and $h_2$, the total speed in two axial directions is proportional to

$$\sqrt{h_1{}^2+h_2{}^2}.$$

Hence, it follows that:

$$\sqrt{h_1{}^2+h_2{}^2}=H \cdot \sqrt{cos^2B+sin^2B}=H$$

This means the profiling speed is always constant.

In the Figure 9, reversing the signal generation directions of photoelectric elements, that is, if right, left, upper and lower elements are so arranged as to feed the tables in the directions of positive X, negative X, positive Y and negative Y, respectively, near point R of command plate 50a should be positioned opposite to stylus center $O_1$ with respect to spindle center $O_2$.

On the other hand, when using the device in surface profiling mode (X—Z axis or Y—Z axis), an electric signal from differential transformer 62 is applied to spindle head feeding motor (Z-axis motor) 4. In this case, offset of stylus S against spindle 10 is not necessary.

This mode is explained in reference to Figure 14. While tracer T is not in contact with model M, stylus S is at the lowest position with respect to case A by virtue of its own gravity, and differential transformer 62 generates a negative signal so that motor 4 lowers the spindle head 2 with tracer T. When the stylus S contacts with model M, stylus S ascends with respect to case A, and differential transformer 62 is at zero potential state, thereby the motor 4 stops and model M is fed in the direction F to profile the horizontal surface. Next, when stylus S reaches the right ascent slope, stylus S slightly inclines to the relative profiling direction with respect to model M. At this time, core 622 ascends, and differential transformer 62 gives off a positive signal in proportion to such ascent extent so that motor 4 raises tracer T at a speed proportional to this ascent extent.

In the case of profiling the right descent slope from the horizontal surface, since model M is always moving in a way to be remote from stylus S, stylus scarcely inclines and stays at a low position with respect to case A. Hence, differential transformer 62 generates a negative signal and motor 4 lowers tracer T.

The same steps are taken if stylus S hits against a vertical surface or a steep slope, but the inclination extent of stylus S becomes large to spoil the profiling accuracy. This problem can be solved by lifting stylus S in relation to case A, corresponding to the inclination, to wit, if the inclination of stylus S increases to cause the positive or negative signal of differential transformer to exceed the preset value, the signal is sent out to other device outside of the illustrated range, for instance to an oil supply solenoid valve to open it so as to feed pressure oil into oil port 314 in tracer support tube 31, thereby lifting this tube 31 with respect to case A. In this constitution, the lifting extent should be limited to the negative signal generating position which is slightly lower than the zero position, as indicated by broken line U in Figure 14. Thus, stylus S is always contacting model M and its inclination increment is blocked to maintain a slight inclination.

In the case of surface profiling, as explained above, since stylus S inclines when reaching the ascent slope of model M, cutter C is relatively ahead of stylus so that the cutting of cutter C becomes deep. To the contrary, when reaching the descent slope, the cutting of cutter C becomes shallow.

This problem can be solved by giving a correction allowance to compensate for stylus inclination when stylus S profiles the model ascent slope, to the contact point between stylus S and model M, and by inverting stylus S by 180 degrees when profiling the descent slope.

Namely, stylus S may be offset to the profiling direction side with respect to spindle 10, or it may be inclined, or, as shown in Figure 16, it may be fitted with a leading button $S_1$ at its one side.

As an example of directivity holding means for stylus, the aforementioned photoelectric element 52 and command plate 50a are utilized. That is, as shown in Figure 15, when profiling in the direction of X-axis, it is so wired that the electric signals from elements 52a and 52b on Y-axis are sent to motor 41 by way of switch SW and amplifier AMP. The rotating direction of motor 41 is determined to be clockwise and counter-clockwise, for instance, with respect to signals from elements 52a and 52b, respectively.

Therefore, if elements 52a and 52b receive even a slight quantity of light, command plate 50a rotates to render the photo receiving quantity to zero, and finally, as shown in Figure 15, element 52c entirely receives light and stylus center $O_1$ advances ahead of spindle center $O_2$ in the profiling direction, so that the table moves in (—)X direction as indicated by arrow F while lines m and n are running along the X-axis.

When the table reaches the left limit position, a reverse rotation command signal is issued to motor 41 from an already known position detecting means which consists of limit switch, dog, etc. (not shown), and this signal is sent to an already known reverse rotation means, for instance, designed to change the motor polarity or otherwise. Consequently, motor starts to run reversely and stops, and, this time, element 52d is made to entirely receive light so that the table is sent in (+) X-axis direction. After Y direction pick feed was given, likewise, when the table reaches its right limit position also, motor 41 reverses its direction, and stylus S and command plate 50a return to their original status.

Meanwhile, in the case of profiling an ascent slope, as mentioned above, the cutting amount of cutter increases suddenly at the beginning of the slope, causing incapability of cutting, therefore, the table feed speed cannot help being small even though uneconomically. This problem can be solved by constituting a design which prohibits cutting when profiling an ascent slope but permits cutting only while profiling a descent slope, thereby causing smaller cutting error.

In practice, as illustrated in Figure 16, if the correction allowance of stylus leading button $S_1$ is enlarged to such an extent that cutter C does not touch the work even when stylus S contacts model M, cutter C does not cut when profiling an ascent slope but cuts only when profiling a descent slope. Next, by profiling and cutting with the stylus inverted by the said stylus inverting means, the entire model can be profiled and cut perfectly.

Since the servo capacity of this device can respond at high accuracy, it can sufficiently cope with vibrations induced by heavy cutting at 3000 rpm of cemented carbide cutting tool, for instance. Furthermore, because there is offset point $O_1$ of stylus S ahead in the running direction of stylus S against the cutter, the stylus comes to profile on the model surface going ahead of the cutter, the displacement of stylus S can be taken out immediately earlier than the cutter by the offset quantity even against abrupt changes in the profiling direction. In this course of time, the servo mechanism can sufficiently complete the speed reduction and direction change of the table and, therefore, no abnormal biting is caused even in high speed profiling and heavy cutting, for instance, at 1500 mm/min or 2000 mm/min.

Also, the work table is not directly driven from the stylus displacement by the first detecting means of the spindle displacement detecting means 60, but is driven by the second detecting means of the work table shift command part 50 in addition to said first means. Then, the direct effect of machine vibration due to cutting is eliminated, which enables a high accuracy profiling work.

In addition, the said spindle lifting means contributes to a small correction amount for the stylus and a better processing precision even in profiling and cutting of steep ascent slope. Further, by inverting the stylus, cutting of both ascent and descent slopes is even and the roughness of the cut surface is greatly reduced as compared with that of conventional process, thereby magnificently saving man-hours required in finishing work.

For the said table shift amount detecting part to deliver electric signals in analog fashion, a wire strain gauge or piezo-electric element to change electric resistance by strain or differential transformer, hydraulic pilot valve or other means may be used instead of photoelectric element. In such a constitution, the leaf spring on which wire strain gauge or piezo-electric element is glued, or the iron core of differential transformer, or the end of spool of pilot valve is made to contact and function on the circumferential surface of command plate 50a, of which signal moves the table and tracer.

These may also substitute the differential transformer of the said spindle inclination detecting part. That is, for example, the end of leaf spring which is preliminarily downward-oriented to issue negative signal is horizontally pressed on the upper end of displacement ball 23 and fixed at the case side, and the wire strain gauge is attached to the said spring. In another example, the piezo-electric element is pressed on the upper end of displacement ball 23 by way of a spring. In a further example, a light mask plate is fixed on spindle, and a light source and photoelectric elements are arranged oppositely across it, and these elements are placed above and beneath the light mask plate which is located at the neutral position.

Also, as the spindle lifting means, instead of the said hydraulic system, electric means and pneumatic means may be applied such as magnetic solenoid and induction magnet.

Again, as the stylus inverting means, besides the above said method, the spindle may be rotated 180 degrees by oil pressure.

The invention is thus made manifest and has enabled high-accuracy, high-speed, heavy-duty cutting.

**Claims**

1. A tracer for contour or surface profiling comprising: a stylus (S) eccentrically fixed at a lower end of a tracer spindle (10), the spindle being supported in a tracer case roughly vertically in a way to permit slight inclination and free rotation, a spindle inclination detecting unit (20, 60) provided so as to detect spindle inclination with respect to contact of the stylus (S) with a model in an analogue fashion and a work table shift command plate (50a) supported to permit rotation at the same speed as the spindle characterised in that the outer periphery of the command plate (50a) is of smooth curvature such that the distance from centre of rotation to the outer periphery symmetrically increases gradually according to the curvature of H (1—cosB) (where, H: maximum increment of distance from centre of rotation $O_2$ of command plate 50a to the outer periphery, B: an angle of radius vector with respect to symmetrical line n of command plate 50a) from a near point at zero degrees up to positive and negative 90°, and being constant elsewhere, and in that there are provided the work table shift detecting means including a disc (51b) fixed in the tracer case, four photoelectric transducer elements (52) mounted radially on the disc at equal intervals on the periphery of a circle concentric with shaft centre $O_2$ of the spindle (10), pairs of said photoelectric transducer elements (52) confronting each other with respect to the centre of the tracer spindle and being positioned on the longitudinal and lateral line of direction of the work table motion respectively, there being light sources (53) confronting photoelectric element, and in that the spindle inclination detecting unit comprises a differential transformer (62) which gives analogue signals in accordance with the extent of inclination.
2. A tracer as claimed in claim 1 arranged to be used for contour profiling characterised in that the voltage output from the four photoelectric elements (52) is connected to move the work table in two directions intersecting each other at right angles and in that the analogue signals from the differential transformer (62) are applied to change the rotational speed of the spindle in proportion to the extent of inclination.

3. A tracer as claimed in claim 1 arranged to be used for surface profiling characterised in that there is provided a stylus directivity supporting means so that stylus correction may be effected with respect to profiling direction, and in that the voltage output from the four photoelectric transducer elements (52) is used to reverse the stylus by 180 degrees when the worktable comes to an inverting indication position, and in that the analogue signals from the differential transformer (62) are applied to raise and lower the spindle by means of a spindle lifting means (33).

4. A tracer as claimed in Claim 1, wherein the tracer spindle having at its upper end an upper support dent designed in reversed conical form and being supported by an upper support and a lower support, said upper support comprising:

a displacement bar which penetrates vertically through a support block in a manner to permit free vertical movement and has at its lower end a lower support dent in reversed conical form opposite to the upper support dent of the tracer spindle,
a spherical midway displacement member being held between the said two support dents,
a spring means biasing said displacement bar downwardly, and
the inclination of the tracer spindle being converted to vertical displacement of the displacement bar, which being connected to the analog detecting unit.

5. A tracer as claimed in Claim 4, wherein the spindle inclination detecting unit comprising,

a differential transformer coil being housed in cylindrical cavity in a support block, and
a differential transformer core being connected to the displacement bar, and
at least one of these coil and core being free for vertical movement and rest.

6. A tracer as claimed in Claim 5, wherein the differential transformer coil being housed in the cylindrical cavity in the support block freely for vertical movement, a support spring being housed between the coil and the bottom of the cylindrical cavity for biassing the coil upwardly, a height adjustment member for said support spring being provided in contact with the upper surface of the coil, the coil being provided on a core holding arm projecting from the displacement bar in a manner to permit free height adjustment.

7. A tracer as claimed in Claim 3, wherein the tracer spindle being supported by an upper support and a lower support, said lower support including a spindle guide which supports the spindle in a manner to permit a slight inclination and vertical movement in the tracer case, said spindle guide being lifted.

8. A tracer as claimed in Claim 7, wherein the spindle guide is lifted by fluid pressure.

9. A tracer as claimed in Claim 3, wherein a support tube is provided on the lower part of the tracer case in a manner to permit slight vertical oscillation, an upper and a lower stopper for said support tube motion being provided, a lift-up member being provided on the support tube, the spindle guide being lifted by said lift-up member.

10. A tracer as claimed in Claim 9, wherein the support tube is fixed on the lower outer periphery of the tracer case, said support tube having a peripheral bank on its interior surface by way of step in the midway in the axial direction, a pressure fluid cavity being provided between said step and the stoppers, a pressure fluid hole connecting to said pressure fluid cavity being furnished in the support tube.

11. A tracer as claimed in Claim 3, wherein the tracer spindle having at its upper end an upper support dent designed in reversed conical form and being supported by an upper support and a lower support, said upper support comprising:

a displacement bar which penetrates vertically through a support block in a manner to permit free vertical movement and has at its lower end a lower support dent in reversed conical form opposite to the upper support dent of the tracer spindle,

a spherical midway displacement member being held between the said two support dents,

a spring means biassing said displacement bar downwardly, and

the inclination of the tracer spindle being converted to vertical displacement of the displacement bar, which being connected to the analog detecting unit.

12. A tracer as claimed in Claim 3, wherein the spindle inclination detecting unit comprises:

a differential transformer coil being housed in cylindrical cavity in a support block, and

a differential transformer core being connected to the displacement bar, and

at least one of these coil and core being free for vertical movement and rest.

13. A tracer as claimed in Claim 12, wherein the differential transformer coil is housed in the cylindrical cavity in the support block freely for vertical movement, a support spring being housed between the coil and the bottom of the cylindrical cavity for biassing the coil upwardly, a height adjustment member for said support spring being provided in contact with the upper surface of the coil, the core being provided on a core holding arm projecting from the displacement bar in a manner to permit free height adjustment.

14. A tracer as claimed in Claim 3, wherein the correction allowance added to the stylus is of such an extent as to compensate for stylus inclination.

15. A tracer as claimed in Claim 3, wherein the correction allowance added to the stylus is of such an extent that a cutter does not touch the work even when the stylus contacts the model.

**Revendications**

1. Palpeur pour explorer un contour ou une surface profilé comprenant: un stylet (S) fixé excentriquement à une extrémité inférieure d'une broche de palpeur (10), la broche étant supportée dans un fourreau de palpeur de telle manière à être approximativement verticale et à pouvoir subir une légère inclinaison et une libre rotation, une unité de détection de l'inclinaison de la broche (20, 60) conçue pour détecter l'inclinaison de la broche par rapport au point de contact du stylet (S) avec un gabarit d'une façon analogique, et une plaque de commande du déplacement de la table de travail (50a), supportée de façon à permettre une rotation à la même vitesse que la broche, caractérisé en ce que le pourtour extérieur de la plaque de commande (50a) présente une courbure régulière telle que la distance entre le centre de rotation et le pourtour extérieur augmente progressivement et de façon symétrique selon la courbure de H(1−cosB) (où, H est l'incrément maximum de la distance entre le centre de rotation $O_2$ de la plaque de commande 50a, et le pourtour extérieur, B est un angle du rayon vecteur par rapport à la ligne de symétrie n de la plaque de commande 50) depuis un point de rebroussement situé à zéro degré jusqu'à des points situés à +90° et −90°, et soit constante ailleurs, et en ce qu'il comprend des moyens pour détecter le déplacement de la table de travail incluant un disque (51b) fixé au fourreau du palpeur, quatre éléments transducteurs photo-électriques (52) montés radialement sur le disque, à des intervalles égaux le long du pourtour d'un cercle concentrique au centre $O_2$ de l'axe de la broche (10), lesdits éléments transducteurs photo-électriques (52) se faisant face deux à deux par rapport au centre de la broche du palpeur et étant respectivement placés sur les lignes de direction longitudinale et latérale du mouvement de la table de travail, des sources lumineuses (53) étant disposées en face d'un élément photo-électrique, et en ce que l'unité de détection de l'inclinaison de la broche comprend un transformateur différentiel (62) qui délivre des signaux analogiques en accord avec l'amplitude de l'inclinaison.

2. Palpeur selon la revendication 1, conçu pour être utilisé pour explorer un contour, caractérisé en ce que la tension de sortie des quatre éléments photo-électriques (52) est utilisée pour déplacer la table de travail suivant deux directions se coupant mutuellement à angle droit et en ce que les signaux analogiques du transformateur différentiel (62) sont appliqués pour changer la vitesse de rotation de la broche proportionnellement à l'amplitude de l'inclinaison.

3. Palpeur selon la revendication 1 conçu pour être utilisé pour explorer une surface, caractérisé en ce qu'il est prévu un moyen de support du stylet permettant d'effectuer une correction du stylet par rapport à la direction d'exploration et en ce que la tension de sortie des quatre éléments transducteurs photo-électriques (52) est utilisée pour inverser le stylet de 180° quand la table de travail arrive à une position d'indication d'inversion, et en ce que les signaux analogiques issus du transformateur différentiel (62) sont appliqués pour élever et abaisser la broche par l'intermédiaire d'un moyen de relevage de la broche (33).

4. Palpeur selon la revendication 1, dans lequel la broche du palpeur comporte, à son extrémité supérieure, un creux de support supérieur présentant une forme conique inversée et est supportée par un support supérieur et un support inférieur, ledit support supérieur comprenant:

— une barre de déplacement qui pénètre verticalement à travers un bloc de support de manière à permettre un mouvement vertical libre et qui présente à son extrémité inférieure un creux de support inférieur ayant la forme d'un cône inversé placé en face du creux de support supérieur de la broche du palpeur;
— un élément de déplacement central sphérique retenu entre lesdits deux creux de support;
— un organe élastique sollicitant ladite barre de déplacement vers le bas; et
— l'inclinaison de la broche de palpeur étant convertie en un déplacement vertical de la barre de déplacement qui est reliée à l'unité de détection analogique.

5. Palpeur selon la revendication 4, dans lequel l'unité de détection de l'inclinaison de la broche comprend:

— un enroulement de transformateur différentiel logé dans une cavité cylindrique d'un bloc de support; et
— un noyau de transformateur différentiel relié à la barre de déplacement, et au moins l'un ou l'autre de cet enroulement ou de ce noyau étant libre de se déplacer verticalement et de s'arrêter.

6. Palpeur selon la revendication 5, dans lequel l'enroulement du transformateur différentiel est logé dans la cavité cylindrique du bloc de support de façon à pouvoir se déplacer librement dans le sens vertical, un ressort de support étant interposé entre l'enroulement et le fond de la cavité cylindrique pour solliciter l'enroulement vers le haut, un organe de réglage de hauteur pour ledit ressort de support étant prévu en contact avec la surface supérieure de l'enroulement, le noyau étant monté sur un bras de support de noyau faisant saillie sur la barre de déplacement de manière à permettre un libre réglage de la hauteur.

7. Palpeur selon la revendication 3, dans lequel la broche du palpeur est supportée par un support supérieur et un support inférieur, ledit support inférieur incluant un guide de broche qui supporte la broche de manière à lui permettre une légère inclinaison et un mouvement vertical dans le fourreau du palpeur, ledit guide de broche étant relevé.

8. Palpeur selon la revendication 7, dans lequel le guide de broche est relevé par la pression d'un fluide.

9. Palpeur selon la revendication 3, dans lequel un tube de support est prévu sur la partie inférieure du fourreau du palpeur de manière à permettre une légère oscillation verticale, des éléments d'un arrêt supérieur et inférieur étant prévus pour limiter le mouvement dudit tube de support, un organe de relevage étant disposé sur le tube de support, le guide de broche étant relevé par ledit organe de relevage.

10. Palpeur selon la revendication 9, dans lequel le tube de support est fixé sur le pourtour extérieur inférieur du fourreau du palpeur, ledit tube de support comportant un épaulement périphérique sur sa surface intérieure sous la forme d'un gradin central, dans la direction axiale, une cavité pour un fluide sous pression étant prévue entre ledit gradin et les éléments d'arrêt, un trou pour le passage d'un fluide sous pression aboutissant à ladite cavité étant ménagé dans le tube de support.

11. Palpeur selon la revendication 3, dans lequel la broche du palpeur comporte, à son extrémité supérieure, un creux de support supérieur présentant la forme d'un cône inversé et est supportée par un support supérieur et un support inférieur, ledit support supérieur comprenant:

— une barre de déplacement qui pénètre verticalement à travers un bloc de support de telle manière à permettre un mouvement vertical libre et qui a, à son extrémité inférieure, un creux de support inférieur présentant une forme conique inversée et faisant face au creux de support supérieur de la broche du palpeur;
— un organe de déplacement sphérique central retenant ces deux creux de support;
— un élément élastique sollicitant ladite barre de déplacement vers le bas; et
— l'inclinaison de la broche du palpeur étant convertie en un déplacement vertical de ladite barre de déplacement, laquelle est reliée à l'unité de détection analogique.

12. Palpeur selon la revendication 3, dans lequel l'unité de détection de l'inclinaison de la broche comprend:

— un enroulement de transformateur différentiel logé dans une cavité cylindrique d'un bloc de support; et
— un noyau de transformateur différentiel relié à la barre de déplacement, et au moins l'un ou l'autre de cet enroulement ou de ce noyau étant libre de se déplacer verticalement et de s'arrêter.

13. Palpeur selon la revendication 12, dans lequel l'enroulement du transformateur différentiel est logé dans la cavité cylindrique du bloc de support avec une liberté de mouvement dans le sens vertical, un ressort de support étant interposé entre l'enroulement et le fond de la cavité cylindrique pour solliciter l'enroulement vers le haut, un organe de réglage de hauteur pour ledit ressort de support étant prévu en contact avec la face supérieure de l'enroulement, le noyau étant monté sur un bras de support faisant saillie sur la barre de déplacement de telle manière à permettre un libre réglage de la hauteur.

14. Palpeur selon la revendication 3, dans lequel la latitude de correction donnée au stylet est suffisante pour permettre de compenser l'inclinaison du stylet.

15. Palpeur selon la revendication 3, dans lequel la latitude de correction donnée au stylet est suffisante pour qu'un outil de coupe ne touche pas la pièce même lorsque le stylet est en contact avec le gabarit.

**Patentansprüche**

1. Fühler zum Abtasten einer Kontur- oder Flächenprofilierung mit einem Abtaststift (S), der exzentrisch an einem unteren Ende einer Fühlerspindel (10) befestigt ist, wobei die Spindel in einem Fühlergehäuse etwa vertikal in der Weise gehalten ist, daß eine leichte Neigung und eine freie Rotation ermöglicht werden, mit einer Spindelneigungsfeststelleinheit (20, 60), die so angeordnet ist, daß sie die Spindelneigung in bezug auf die Berührung des Abtaststifts (S) mit einem Modell in analoger Form feststellt, und mit einer Werkstücktischverschiebungsbefehlsplatte (50a), die so gehalten ist, daß sie eine Drehung mit derselben Drehzahl wie die Spindel ermöglicht, dadurch gekennzeichnet, daß der Außenumfang der Befehlsplatte (50a) eine glatte Krümmung derart ist, daß der Abstand von der Drehmitte zum Außenumfang symmetrisch allmählich entsprechend der Krümmung von H (1−cosB) (worin sind H: maximales Inkrement des Abstands vom Drehmittelpunkt O2 der Befehlsplatte 50a zum Außenumfang, B: ein Winkel des Radiusvektors in bezug auf eine symmetrische Linie n der Befehlsplatte 50a) von einem nahen Punkt oder Null Grad bis zu positiven und negativen 90° zunimmt und anderswo konstant ist, und daß die Werkstücktischverschiebefeststelleinrichtungen vorgesehen sind, die eine Scheibe (51b), die in dem Fühlergehäuse befestigt ist, und vier photoelektrische Übertragerelemente (52) enthalten, die radial an der Scheibe in gleichen Abständen am Umfang eines zum Wellenmittelpunkt O2 der Spindel (10) konzentrischen Kreises angeordnet sind, wobei Paare der photoelektrische Übertragerelemente (52) einander in bezug auf den Mittelpunkt der Fühlerspindel gegenüberliegen und jeweils auf der Längs- und Querlinie der Richtung der Werkstücktischbewegung angeordnet sind und wobei Lichtquellen (53) dem photoelektrischen Element gegenüberliegen, und daß die Spindelneigungsfeststelleinheit einen Differentialtransformator (62) enthält, der analoge Signale in Übereinstimmung mit der Größe der Neigung abgibt.

2. Fühler nach Anspruch 1, der so ausgebildet ist, daß er zur Konturprofilierung verwendet wird, dadurch gekennzeichnet, daß der Spannungsausgang von den vier photoelektrischen Elementen (52) so geschaltet ist, daß er den Werkstücktisch in zwei Richtungen bewegt, die einander in rechten Winkeln schneiden, und daß die analogen Signale von dem Differentialtransformator (62) zugeführt werden, um die Drehzahl der Spindel proportional zur Größe der Neigung zu ändern.

3. Fühler nach Anspruch 1, der so ausgebildet ist, daß er zur Flächenprofilierung verwendet wird, dadurch gekennzeichnet, daß eine Abtaststiftrichtungstützeinrichtung so vorgesehen ist, daß ein Abtaststiftkorrektur in bezug auf die Profilierungsrichtung durchgeführt werden kann, und daß der Spannungsausgang von den vier photoelektrischen Übertragerelementen (52) verwendet wird, um den Abtaststift um 180° umzukehren, wenn der Werkstücktisch an eine Umkehranzeigeposition kommt, und daß die analogen Signale von dem Differentialtransformator (62) angelegt werden, um die Spindel mittels einer Spindelhebeeinrichtung (33) anzuheben und abzusenken.

4. Fühler nach Anspruch 1, bei dem die Fühlerspindel an ihrem oberen Ende einen oberen Stützvorsprung aufweist, die in imgekehrter konischer Form ausgebildet und durch eine obere Stütze und eine untere Stütze gestützt ist, wobei die obere Stütze enthält:

eine Verschiebungsstange, die vertikal eine Stützblock derart durchdringt, daß sie eine freie vertikale Bewegung erlaubt, und die an ihrem unteren Ende einen unteren Stützvorsprung in umgekehrter konischer Form gegenüberliegend dem oberen Stützvorsprung der Fühlerspindel aufweist,

ein sphärisches Mittelverschiebungsorgan, das zwischen den beiden Stützvorsprüngen gehalten ist, und

eine Federeinrichtung, welche die Verschiebungsstange nach unten vorspannt,

wobei die Neigung der Fühlerspindel in eine vertikale Verschiebung der Verschiebungsstange, die mit der analogen Feststelleinheit verbunde ist, umgesetzt wird.

5. Fühler nach Anspruch 4, bei dem die Spindelneigungsfeststelleinheit enthält:

eine Differentialtransformatorspule, die in einem zylindrischen Hohlraum in einem Stützblock untergebracht ist, und

einen Differentialtransformatorkern, der mit der Verschiebungsstange verbunden ist, wobei die Spule und/oder der Kern für eine vertikale Bewegung und Ruhestellung frei angeordnet sind.

6. Fühler nach Anspruch 5, bei dem die Differentialtransformatorspule in dem zylindrischen Hohlraum in dem Stützblock frei für eine vertikale Bewegung untergebracht ist, eine Stützfeder zwischen der Spule und dem Boden des zylindrischen Hohlraums zum Vorspannen der Spule nach oben untergebracht ist, ein Höheneinstellorgan für die Stützfeder in Berührung mit der oberen Fläche der Spule vorgesehen ist und der Kern in einem Kernhaltearm vorgesehen ist, der von der Verschiebungsstange derart vorragt, daß er eine freie Höheneinstellung ermöglicht.

7. Fühler nach Anspruch 3, bei dem die Fühlerspindel durch eine obere Stütze und eine untere Stütze gehalten ist, wobei die untere Stütze eine Spindelführung enthält, welche die Spindel derart hält, daß eine leichte Neigung und eine vertikale Bewegung in dem Fühlergehäuse ermöglicht wird, wobei die Spindelführung angehoben wird.

8. Fühler nach Anspruch 7, bei dem die Spindelführung durch Strömungsmitteldruck angehoben wird.

9. Fühler nach Anspruch 3, bei dem ein Stützrohr an dem unteren Teil des Fühlergehäuses derart vorgesehen ist, daß eine leichte vertikale Schwingung ermöglicht wird, wobei ein oberer und ein unterer Anschlag für die Stützrohrbewegung vorgesehen sind, das Anheborgan an dem Stützrohr vorgesehen ist und die Spindelführung durch das Spindelanheborgan angehoben wird.

10. Fühler nach Anspruch 9, bei dem das Stützrohr an dem unteren äußeren Umfang des Fühlergehäuses befestigt ist, wobei das Stützrohr eine Umfangsbank an ihrer Innenfläche mittels einer Stufe auf halbem Wege in axialer Richtung aufweist, ein Strömungsmittelhohlraum zwischen der Stufe und den Anschlägen vorgesehen ist und ein mit dem Strömungsmittelhohlraum verbundenes Strömungsmittelloch in dem Stützrohr vorgesehen ist.

11. Fühler nach Anspruch 3, bei dem die Fühlerspindel an ihrem oberen Ende einen oberen Stützvorsprung aufweist, der in umgekehrter konischer Form ausgebildet ist und durch eine obere Stütze und eine untere Stütze gestützt ist, wobei die obere Stütze enthält:

eine Verschiebungsstange, die den Stützblock derart durchdringt, daß eine freie vertikale Bewegung ermöglicht wird, und die an ihrem unteren Ende einen unteren Stützvorsprung in umgekehrter konischer Form gegenüberliegend dem oberen Stützvorsprung der Fühlerspindel aufweist,
ein sphärisches Mittelverschiebungsorgan, das zwischen den beiden Stützvorsprüngen gehalten ist,
eine Federeinrichtung, welche die Verschiebungsstange nach unten vorspannt, und wobei
die Neigung der Fühlerspindel in eine vertikale Verschiebung der Verschiebungsstange, die mit der analogen Feststelleinheit verbunden ist, umgesetzt wird.

12. Fühler nach Anspruch 3, bei dem die Spindelneigungsfeststelleinrichtung enthält:

eine Differentialtransformatorspule, die in einem zylindrischen Hohlraum in einem Stützblock untergebracht ist, und
einen Differentialtransformatorkern, der mit der Verschiebungsstange verbunden ist, und wobei
die Spule und/oder der Kern frei für eine vertikale Bewegung und Ruhelage angeordnet sind.

13. Fühler nach Anspruch 12, bei dem die Differentialtransformatorspule in dem zylindrischen Hohlraum in dem Stützblock frei für eine vertikale Bewegung untergebracht ist, eine Stützfeder zwischen der Spule und dem Boden des zylindrischen Hohlraums zum Vorspannen der Spule nach oben untergebracht ist, ein Höheneinstellorgan für die Stützfeder in Berührung mit der oberen Fläche der Spule vorgesehen ist und der Kern an einem Kernhaltearm vorgesehen ist, der von der Verschiebungsstange derart vorragt, daß eine freie Höheneinstellung ermöglicht wird.

14. Fühler nach Anspruch 3, bei dem die dem Abtaststift beigegebene Korrekturtoleranz eine solche Größe hat, daß die Abtaststiftneigung kompensiert wird.

15. Fühler nach Anspruch 3, bei dem die die dem Abtaststift beigegebene Korrekturtoleranz eine solche Größe hat, daß ein Schneidwerkzeug nicht das Werkstück berührt, auch wenn der Abtaststift das Modell berührt.

Fig.1.

0011652

Fig.2.

III,IV

66

24

41

III,IV

A1

Fig.7.

66

22

A1

42

64

65

61

622

2

**0011 652**

Fig. 3.

3

Fig.4.

_Fig.5._

A2

46

311

10

_Fig.6._

10

46

47

463

14

_Fig.8._

50

50b

52

52a

51

50a

51a

51c

51b

52c

51b

52d

52b

51c

**0011652**

Fig. 9.

Fig. 10.

Fig. 12.

Fig. 11.

Fig. 13.

(a)

(b)

(c)

(d)

6

Fig. 14.

Fig. 15.

Fig. 16.